# EUROPÄISCHE PATENTSCHRIFT

(11) **EP 1 344 630 B1**
(45) Veröffentlichungstag und Bekanntmachung des Hinweises auf die Patenterteilung: **19.09.2012**
(21) Anmeldenummer: 03005673.3
(22) Anmeldetag: 13.03.2003
(51) Int. Cl.: B29C 65/02, B29C 65/14, B29L 22/00

(54) **Verfahren zum Verschweissen zweier Bauteile aus Kunststoff**
Process for welding two plastic parts
Procédé de soudage de deux pièces en matière plastique

(30) Priorität: 13.03.2002 DE 10211005
(43) Veröffentlichungstag der Anmeldung: 17.09.2003
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck/Aldingen (DE)
(74) Vertreter: BRP Renaud & Partner

(56) Entgegenhaltungen:
- WO-A-00/10733
- WO-A-01/47691
- DE-A1- 19 719 363
- US-A- 4 222 974
- US-A- 4 618 516
- US-A- 5 263 606

## Beschreibung

Die Erfindung betrifft ein Verfahren zum Verschweißen zweier Bauteile aus Kunststoff gemäß dem Oberbegriff des Anspruchs 1.

Aus der DE 197 19 363 A1 sind ein gattungsgemäßes Verfahren zur Verbindung zweier Bauteile aus Kunststoff sowie eine aus zwei Bauteilen nach dem gattungsgemäßen Verfahren hergestellte Verbundanordnung bekannt. Dabei werden einander gegenüberliegende Seiten der jeweils miteinander zu verbindenden Bauteile mittels einer Infrarotheizeinrichtung erhitzt und unter Druck miteinander verbunden.

Aus der US 4,222,974 ist ein hermetisch abgedichteter und wiederverschließbarer Container bekannt, welcher aus zumindest zwei Kunststoffschalen gebildet ist, welche randseitig miteinander verschweißt sind.

Aus der WO 00/10733 ist ein Schwammauftragskopf bekannt, dessen Schwamm über im Schwammauftragskopf angeordnete Keilzinken gehalten ist.

Aus der US 5,263,606 ist ein zweischaliger Hohlkörper bekannt, wobei die beiden Schalen randseitig über eine Ultraschallschweißverbindung miteinander verbunden sind.

Aus der WO 01/47691 A1 ist ein vibrationsgeschweißter Kunststoffgegenstand bekannt, der ein erstes Kunststoffschweißstück sowie ein zweites Kunststoffschweißstück umfasst. Die miteinander zu verschweißenden Oberflächen des ersten und des zweiten Kunststoffschweißstücks sind dabei flach bzw. gewellt ausgebildet, um ein seitliches Abfließen der Schmelze zwischen den einzelnen Schweißstücken zu begrenzen.

Schließlich ist aus der US 4,618,516 ein Verfahren zur Verbindung zweiter thermoplastischer Werkstücke durch Ultraschallschweißen bekannt.

Die Erfindung beschäftigt sich mit dem Problem, ein Verfahren zum Verschweißen von Bauteilen aus Kunststoff zu schaffen, das einfacher und rationeller gegenüber den hierzu bisher bekannten Verfahren durchführbar ist.

Gelöst wird dieses Problem in erster Linie bereits durch ein Verfahren nach den kennzeichnenden Merkmalen des Patentanspruchs 1.

Die Erfindung beruht auf dem allgemeinen Gedanken, für die Schweißverbindung lediglich eines der beiden, miteinander zu verbindenden Teile für den Verbindungsbereich zu erwärmen, während die Erwärmung des anderen, anzuschweißenden Bauteiles aus der Wärmekapazität des erhitzten zweiten Bauteiles in dem Verbindungsbereich für eine gegenseitige Verschmelzung der Kunststoffmaterialien der beiden zu verbindenden Teile erzeugt wird. Um ein solches Aufschmelzen des Verbindungsbereiches des ersten Bauteiles erreichen zu können, ist in dessen Anlagebereich mindestens ein abragender Bindekörper vorgesehen, dessen Form und Volumen derart auszubilden ist, dass bei einem Andrücken des erhitzten Anlagebereiches des zweiten Bauteiles dieser Bindekörper in einem für ein Verschmelzen ausreichenden Umfang auf- und mit dem Gegenmaterial verschmelzen kann. Besonders geeignet sind hierfür eine stift- oder stachelartige Ausbildung des mindestens einen Bindekörpers, wobei zweckmäßigerweise eine Zone mit mehreren Bindekörpern vorgesehen werden kann.

Funktionell und wirtschaftlich besonders vorteilhaft lässt sich das erfindungsgemäße Verfahren durch ein Erhitzen des Verbindungsbereiches des ausschließlich zu erhitzenden zweiten Bauteiles durch Infrarotstrahlung durchführen. Eine Erhitzung durch Infrarotstrahlung hat den Vorteil, dass der zu erhitzende Verbindungsbereich tief in das Materialinnere hinein äußerst rasch und gut erhitzt wird.

Eine besonders gute Schweißverbindung kann erzielt werden, wenn der mindestens eine Bindekörper bei dem ersten Bauteil in einer Mulde oder einem Kanal vorgesehen ist und das zweite Bauteil zur Schweißverbindung in diese Ausnehmung an dem ersten Bauteil eingeführt wird und dort durch Materialverformung die Ausnehmung möglichst vollständig bei der fertigen Schweißverbindung materialmäßig formschlüssig ausfüllt. Hierdurch erhält die Schweißverbindung noch zusätzlich zu der gegenseitigen Verschmelzung der miteinander zu verbindenden Materialien eine mechanische Verbindungsfestigkeit.

Ein besonders zweckmäßiges Ausführungsbeispiel der Erfindung ist in der Zeichnung dargestellt.

In dieser zeigen
- Fig. 1: einen Schnitt durch zwei miteinander zu verschweißende topfförmige Bauteile,
- Fig. 2: einen vergrößert dargestellten Ausschnitt II aus dem Schweißverbindungsbereich zwischen den beiden Bauteilen in Fig. 1,
- Fig. 3: die in Fig. 2 noch in unverschweißtem Zustand gezeigten Bauteilbereiche in verschweißtem Zustand.

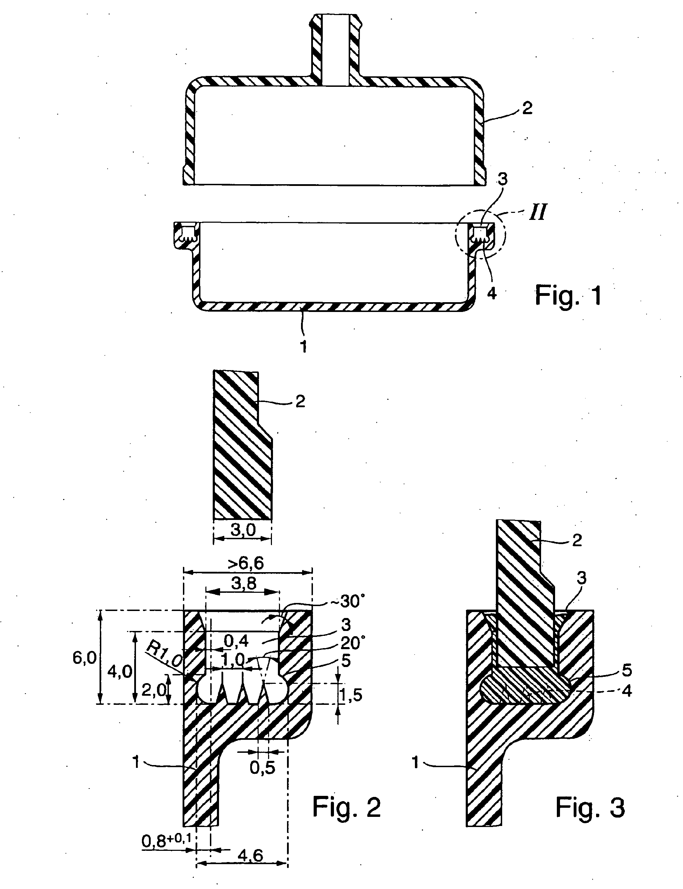

In Fig. 1 sind für ein Verschweißen ein erstes und ein zweites Bauteil 1 bzw. 2 aus jeweils Kunststoff zur Durchführung einer Schweißverbindung vorbereitet. Die beiden Bauteile 1, 2 sind topfförmig ausgebildet und die Verschweißung soll zwischen den beiden Topf-Rändern erfolgen.

Die genaue Ausbildung der Verbindungsbereiche des ersten und zweiten Bauteiles 1, 2 ist in der vergrößerten Darstellung nach Fig. 2 gut erkennbar. In dem ersten Bauteil ist ein umlaufender Kanal 3 vorgesehen, aus dessen Boden Bindekörper 4 abragen. Diese Bindekörper 4 verjüngen sich zu ihren freien Enden hin, wobei sie als einzelne Kegelstifte oder auch als ein durchgehender oder auch unterbrochener Steg ausgebildet sein können.

Das zweite Bauteil ist in seinem Verbindungsbereich derart ausgebildet, dass es in der Form eines Steges in den Kanal 3 des ersten Bauteiles einschiebbar ist. Dabei ist eine Abmessung gewählt, die beim Einschieben des zweiten Bauteiles 2 in den Kanal 3 des ersten Bauteiles seitliche Abstände zu den beiden Kanalwänden erlaubt. Zur Veranschaulichung von für einen Spezialfall besonders geeigneten Abmessungen sind diese in Fig. 2 jeweils in Millimeter bzw. Winkelgradangaben zwischen zugeordneten Maßpfeilen angegeben.

Zur Durchführung der Schweißverbindung wird ausschließlich das zweite Bauteil 2 in dessen Verbindungsbereich durch beispielsweise Infrarotstrahlung auf Schmelztemperatur erhitzt. Bei dem speziell in Fig. 2 wiedergegebenen Einbaubeispiel, bei dem die beiden Bauteile 1, 2 aus dem Kunststoffwerkstoff PA6GF25 bestehen, kann die erforderliche Erhitzungsdauer des Verbindungsbereiches des zweiten Bauteiles bei Verwendung eines Infrarotstrahlers als Wärmequelle auf einen Zeitraum von nur etwa 5 bis 6 Sekunden begrenzt werden. Nach einer solchen Erhitzungsdauer wird das zweite Bauteil 2 mit seinem Verbindungsbereich in den Kanal 3 eingeführt und gegen die Bindekörper 4 in dessen Bodenbereich angepresst. Durch die Wärmekapazität in dem in den Kanal 3 eingeführten Materialbereich des zweiten Bauteiles 2 werden die Bindekörper 4 praktisch vollständig aufgeschmolzen unter einer Verschmelzung mit dem Material des zweiten Bauteiles 2. Gleichzeitig wird das Material aus dem erhitzten Verbindungsbereich des zweiten Bauteiles 2 innerhalb des Kanales 3 derart verformt, dass ein formschlüssiges Ausfüllen des Kanales 3 mit dem erhitzten Kunststoffmaterial des zweiten Bauteiles 2 erfolgt. Damit wird zu der eigentlichen Schweißverbindung zusätzlich noch eine mechanische Verbindung zwischen den beiden Bauteilen 1 und 2 erzeugt. Eine Erhöhung der Abreißfestigkeit in Schweißfügerichtung kann durch einen hinterschnittartig erweiterten Bodenbereich des Kanales 3 mit Bezug auf die Hochachse des Kanales 3 erzielt werden. In der Zeichnung sind die betreffenden hinterschnittartigen Kanalerweiterungen mit 5 bezeichnet.

Bei dem gezeichneten Ausführungsbeispiel reicht bei einer Erhitzung durch einen Infrarotstrahler bereits ein Anschmelzen in einer Tiefe von etwa 1,5 mm in dem Verbindungsbereich des zweiten Bauteiles 2 aus.

Der besondere Vorteil des erfindungsgemäßen Verfahrens besteht darin, dass nur eines der beiden miteinander zu verbindenden Bauteile erwärmt werden muss. Grundsätzlich können unterschiedliche Kunststoffmaterialien miteinander verschweißt werden. Voraussetzung ist allerdings jeweils, dass die Schmelztemperatur des Kunststoffes des jeweils nicht erhitzten ersten Bauteiles 1 nicht höher liegt als diejenige des erhitzten Kunststoffmaterials des zweiten Bauteiles 2.

## Patentansprüche

1. Verfahren zum Verschweißen zweier Bauteile aus Kunststoff, **gekennzeichnet durch** die Merkmale
- ein erstes der beiden Bauteile (1, 2) besitzt vor dem Verschweißen in einem Kanal (3) mindestens einen abragenden Bindekörper (4),
- der mindestens eine Bindekörper (4) weist eine Form und ein Volumen auf, **durch** die dieser bei Kontaktierung mit einem erhitzten Verbindungsbereich des zweiten Bauteiles (2) unter der von dem erhitzten Bereich des zweiten Bauteiles (2) ausgehenden Wärmekapazität mit dem erhitzten Material des zweiten Bauteiles (2) verschmelzen kann,
- das Verschweißen erfolgt **durch** ausschließliches Erhitzen eines Verbindungsbereiches des zweiten Bauteiles (2) in einem ersten Schritt und Gegeneinanderdrücken der beiden Bauteile (1, 2) in deren Verbindungsbereichen in noch erhitztem Zustand des Verbindungsbereiches des zweiten Bauteiles (2) bis zu einem Verschmelzen mindestens eines Teilbereiches des mindestens einen Bindekörpers (4) des ersten Bauteiles (1) mit dem anliegenden Kunststoffmaterialbereich des zweiten Bauteiles (2) in einem zweiten Schritt,
- das Material aus dem erhitzten Verbindungsbereich des zweiten Bauteils (2) wird innerhalb des den mindestens einen Bindekörper (4) enthaltenden Kanals (3) derart verformt, dass ein formschlüssiges Ausfüllen zumindest eines Bodenbereichs des Kanals (3) mit dem erhitzten Kunststoffmaterial des zweiten Bauteils (2) erfolgt.

2. Verfahren nach Anspruch 1,
**dadurch gekennzeichnet,**
**dass** der Verbindungsbereich des zweiten Bauteiles (2) durch Infrarotstrahlung erhitzt wird.

3. Verfahren nach Anspruch 1 oder 2,
**dadurch gekennzeichnet,**
**dass** beim Verschweißen der beiden Bauteile (1, 2) das Material aus dem erhitzten Verbindungsbereich des zweiten Bauteils (2) in, im Kanal (3) des ersten Bauteils (1) hinterschnittartig ausgebildete Kanalerweiterungen (5) verformt wird.

## Claims

1. A method for welding two components made of plastic, **characterized by** the features
- prior to welding, a first of the two components (1, 2) has at least one binding body (4) protruding within a channel (3),
- the at least one binding body (4) has a shape and a volume due to which said binding body, when contacting a heated connection region of the second component (2), can melt together under the heat capacity emitted from the heated region of the second component (2) with the heated material of the second component (2),
- welding takes place by exclusively heating a connection region of the second component (2) in a first step, and pressing the two components (1, 2) together in their connection regions in the still heated state of the connection region of the second component (2) until at least one subregion of the at least one binding body (4) of the first component (1) melts together with the abutting plastic material region of the second component (2) in a second step,
- the material from the heated connection region of the second component (2) is deformed within the channel (3) containing the at least one binding body (4) in such a manner that a positive-locking filling with the heated plastic material of the second component (2) takes place in at least one bottom region of the channel (3).

2. The method according to claim 1,
**characterized in**
**that** the connection region of the second component (2) is heated by infrared radiation.

3. The method according to claim 1 or claim 2,
**characterized in**
**that** during welding the two components (1, 2), the material from the heated connection region of the second component (2) is deformed in a channel expansion (5) formed in an undercut-like manner in the channel (3) of the first component (1).

## Revendications

1. Procédé de soudure de deux composants en plastique, **caractérisé par** les caractéristiques
- un premier des deux composants (1,2) possède avant la soudure au moins un corps de liaison (4) dépassant dans un canal (3),
- au moins un corps de liaison (4) présente une forme et un volume, grâce auxquels celui-ci lors du contact avec une zone de liaison chauffée du deuxième composant (2) peut fusionner avec le matériau chauffé du deuxième composant (2) sous l'effet de la capacité thermique sortant de la zone chauffée du deuxième composant (2),
- la soudure a lieu exclusivement en chauffant une zone de liaison du deuxième composant (2) pendant une première étape et en pressant l'un contre l'autre les deux composants (1, 2) au niveau de leurs zones de liaison en l'état encore chauffé de la zone de liaison du deuxième composant (2) jusqu'à une fusion d'au moins une zone partielle du au moins un corps de liaison (4) du premier composant (1) avec la zone de matière plastique venant reposer dessus du deuxième composant (2) pendant une deuxième étape,
- le matériau de la zone de liaison chauffée du deuxième composant (2) est déformé à l'intérieur d'au moins le canal (3) contenant un corps de liaison (4) de telle sorte qu'un remplissage par conjonction de forme d'au moins une zone de base du canal (3) avec la matière plastique chauffée du deuxième composant (2) a lieu.

2. Procédé selon la revendication 1,
**caractérisé en ce que**
la zone de liaison du deuxième composant (2) est chauffée par un rayonnement infrarouge.

3. Procédé selon les revendications 1 ou 2,
**caractérisé en ce que**
lors de la soudure des deux composants (1, 2), le matériau de la zone de liaison chauffée du deuxième composant (2) est déformé en élargissements de canal (5) réalisés comme des contre-dépouilles dans le canal (3) du premier composant (1).
